# EUROPÄISCHE PATENTSCHRIFT

(11) **EP 4 100 762 B1**
(45) Veröffentlichungstag und Bekanntmachung des Hinweises auf die Patenterteilung: **14.08.2024**
(21) Anmeldenummer: 21702235.9
(22) Anmeldetag: 27.01.2021
(51) Int. Cl.: G01S 7/40, G01S 13/931

(54) **VERFAHREN ZUM BETRIEB EINES RADARSENSORS IN EINEM KRAFTFAHRZEUG UND KRAFTFAHRZEUG**
METHOD FOR OPERATING A RADAR SENSOR IN A MOTOR VEHICLE, AND MOTOR VEHICLE
PROCÉDÉ DE FONCTIONNEMENT D'UN CAPTEUR RADAR DANS UN VÉHICULE AUTOMOBILE, ET VÉHICULE AUTOMOBILE

(30) Priorität: 06.02.2020 DE 102020103101
(43) Veröffentlichungstag der Anmeldung: 14.12.2022
(73) Patentinhaber: Audi AG, 85045 Ingolstadt (DE)
(72) Erfinder: KOCH, Niels, 85084 Reichertshofen (DE); HINTERDING, Matthias, 85055 Ingolstadt (DE)
(86) Internationale Anmeldenummer: PCT/EP2021/051786
(87) Internationale Veröffentlichungsnummer: WO 2021/156111

(56) Entgegenhaltungen:
- EP-A1- 3 591 422
- DE-A1- 102012 201 990

## Beschreibung

Die Erfindung betrifft ein Verfahren zum Betrieb eines insbesondere langreichweitigen Radarsensors in einem Kraftfahrzeug, wobei der Radarsensor einen auf das Vorfeld oder den Rückraum des Kraftfahrzeugs gerichteten Erfassungsbereich aufweist, mit einer eine Reichweite des Radarsensors bestimmenden Sendeleistung betrieben wird und die Radardaten des Radarsensors, insbesondere innerhalb des Radarsensors selbst, zur Detektion von Objekten im Erfassungsbereich ausgewertet werden. Daneben betrifft die Erfindung ein Kraftfahrzeug.

Der Einsatz von Radarsensoren in modernen Kraftfahrzeugen ist inzwischen gängig. Dabei sind unterschiedliche Arten von Radarsensoren bekannt, um die Umgebung des Kraftfahrzeugs erfassen zu können. Ein Kurzstreckenradar (short range radar - SRR) weist einen maximalen Messbereich von bis zu 30 m auf, ein Mittelstreckenradar (medium range radar - MRR) eine maximale Reichweite von bis zu 150 m und ein Langstreckenradar (long range radar - LRR) eine maximale Reichweite von bis zu 250 m. Langreichweitige Radare (LRR) werden dabei häufig eingesetzt, um das Vorfeld und den Rückraum des Kraftfahrzeugs in größeren Entfernungen zu überwachen. Die Radardaten, die Radarsensoren eines Kraftfahrzeugs aufnehmen, werden dabei von verschiedenen Fahrzeugfunktionen verschiedener Fahrzeugsysteme, insbesondere Fahrerassistenzsysteme, genutzt. Beispielsweise ist es bekannt, Radardaten eines langreichweitigen Radarsensors in Fahrzeugfunktionen eines längsführenden adaptiven Abstandsregelungssystems (ACC-Systems), eines Überholassistenten, eines Spurwechselassistenten und auch für Sicherheitssysteme, beispielsweise Ausweichsysteme, zu nutzen. Radardaten, auch von langreichweitigen Radarsensoren, werden zudem meist bei einer wenigstens teilweise, insbesondere vollständig, automatischen Führung des Kraftfahrzeugs eingesetzt.

Moderne Radarsensoren, die in Kraftfahrzeugen zur Umfeldüberwachung verbaut werden, nutzen dabei meist wenigstens teilweise Halbleitertechnologien, wobei zum Aussenden der Radarsignale als Sendeeinheiten üblicherweise Sendechips, insbesondere sogenannte MMICs, eingesetzt werden. Je nach genutzter Sendeleistung kann sich ein solcher Sendechip erwärmen.

Dabei ist es im Stand der Technik bekannt, Radarsensoren in Kraftfahrzeugen mit konstanter Sendeleistung zu betreiben, um den Sendechip, insbesondere MMIC, thermisch nicht zu beschädigen bzw. zu zerstören. Dabei wird die Sendeleistung derart auf einen Sendeleistungswert eingestellt, dass unter allen Temperaturbedingungen, beispielsweise im Bereich von -40°C bis +80°C, die thermische Belastung für den Sendechip zerstörungsfrei und meist mit Reserve darstellbar ist. Diese führt zu einer Reduktion der tatsächlich genutzten Sendeleistung gegenüber der grundsätzlich möglichen Sendeleistung, um eine dauerhafte Funktion des Radarsensors unter den thermischen Rahmenbedingungen zu ermöglichen. Beispielsweise werden langreichweitige Radarsensoren (LRR) heute üblicherweise auf 10 dBm Sendeleistung eingestellt, obwohl der Sendechip 13 dBm (20 mW) oder moderne Sendechips sogar 14 dBm (30 mW) Sendeleistung abgeben könnten.

Aufgrund der Reduzierung der Sendeleistung im Hinblick auf den andauernden Betrieb des Radarsensors reduziert sich jedoch auch die maximale Reichweite, in der der Radarsensor Objekte erfassen kann. Dies geht zudem einher mit einer reduzierten Erkennungswahrscheinlichkeit für kleine Objekte, beispielsweise Motorräder. Dabei ist jedoch zu beachten, dass mit zunehmender Reglementierung der Erkennung von Objekten Anforderungen existieren, die insbesondere mittelreichweitige (MRR) und langreichweitige (LRR) Radarsensoren erfüllen müssen. So kann beispielsweise vorgeschrieben sein, dass Motorradfahrer in einem Abstand von 55 m unter allen Umständen erkannt werden müssen (vgl. bspw. die zum Zeitpunkt der Anmeldung aktuelle Fassung der Lenkungsnorm ECT79).

DE 10 2004 017 720 A1 schlägt zur Detektion von Objekten in der Umgebung eines Fahrzeugs in einem Radarsensorsystem vor, die Sendeleistung des Radarsignals adaptiv in Abhängigkeit des tatsächlichen Abstands zu einem nächstgelegenen Objekt unter Berücksichtigung eines für eine gewünschte Radarfunktion vorgesehenen Funktionsparameters zu steuern. Dabei kann vorgesehen sein, dass, je näher das Objekt kommt, desto geringer die Sendeleistung ist, um Übersprecher zu vermeiden. Eine solche Übersteuerung ist insbesondere dann zu erwarten, wenn im Nahbereich, beispielsweise im Abstand von nur wenigen Metern, gemessen werden soll, so dass die dortige Lehre insbesondere Kurzstreckenradare (SRR), insbesondere auch sogenannte Nahbereichsradare (NFR - Near Field Radar) betrifft, die bis in Bereiche von einem Meter oder weniger messen sollen.

DE 10 2007 046 648 A1 betrifft einen Radarsensor zur Erfassung des Verkehrsumfelds in Kraftfahrzeugen. Der Radarsensor weist einen einstellbaren Sende- und/oder Empfangsverstärker und eine Einstelleinrichtung zur Einstellung des Sende- und/oder Empfangsgewinns auf, wobei durch eine Bewertungseinrichtung fortlaufend das Verkehrsumfeld bewertet wird und in Abhängigkeit von der aktuellen Bewertung auf die Einstelleinrichtung eingewirkt wird, um insbesondere im Stadtverkehr die Anzahl störender Radarechos von irrelevanten Objekten zu reduzieren. Hierzu werden komplizierte Beamforming-Ansätze und komplexe Modifikationen der Antennenanordnungen beschrieben.

DE 103 47 214 A1 betrifft ein Radarsystem mit wenigstens einem Detektor für besondere Witterungsbedingungen. In Abhängigkeit von der von dem wenigstens einen Detektor festgestellten besonderen Witterungsbedingung wird die Sendeleistung des Radarsystems gesteuert, wobei beispielsweise bei geringerer Sicht eine Leistungsverstärkung vorgenommen werden soll. Dies würde allerdings den sogenannten Clutter durch beispielsweise Regentropfen und/oder Schneeflocken verstärken.

Der Erfindung liegt daher die Aufgabe zugrunde, eine möglichst frühzeitige Erkennung von Objekten durch einen Radarsensor auf möglichst einfache Art und Weise bei insbesondere aufrechterhaltenen dauerhaften Betrieb zu ermöglichen.

Zur Lösung dieser Aufgabe ist bei einem Verfahren der eingangs genannten

Art erfindungsgemäß vorgesehen, dass bei Erfüllung eines keine, ein Relevanzkriterium erfüllenden, durch den Radarsensor detektierten Objekte anzeigenden Schaltkriteriums die Schaltleistung des Radarsensors von einem ersten Sendeleistungswert auf einen zweiten Sendeleistungswert erhöht wird.

Dabei liegt der Erfindung die Erkenntnis zugrunde, dass dann, wenn man typische Fahrten mit einem Kraftfahrzeug untersucht, das einen langreichweitigen Front- oder Heck-Radarsensor aufweist, eine überwiegende Zeit sich mindestens ein relevantes Objekt im Erfassungsbereich des Radarsensors befindet, in geringerem Ausmaß kein (relevantes) Objekt im Erfassungsbereich detektierbar ist. Daher wird vorgeschlagen, dass dann, wenn kein Objekt, insbesondere kein relevantes Objekt, im Erfassungsbereich detektiert wird, die Sendeleistung des Radarsensors erhöht wird, um die Erfassungsreichweite zu erhöhen und somit auch kleinere Objekte, beispielsweise Motorradfahrer, frühzeitiger erkennbar zu machen. Anstatt also die Sendeleistung auf eine mittlere Dauerleistung einzustellen, wird erfindungsgemäß vorgeschlagen, eine dynamische Sendeleistungsregelung anzustreben.

Denn durch die konservative Leistungseinstellung, um die Sendeeinheit, insbesondere den Sendechip, des Radarsensors thermisch zu schützen, wird die Sendeleistung und somit die Reichweite und die Erkennungsfähigkeit für kleinere Objekte reduziert. Häufig ist es nun der Fall, dass eine hohe Sendeleistung ohnehin nicht benötigt wird, da Objekte ausreichend nah für eine Erfassung mit geringer Sendeleistung sind. Die vorliegende Erfindung ermöglicht es nun, auf Straßen mit wenig Verkehr und in Gebieten mit wenig (relevanten) Objekten die Sendeleistung des Radarsensors zu erhöhen, um eine frühzeitige Erkennung zu erhalten, falls doch ein (relevantes) Objekt erscheint.

Sollte wieder ein Objekt auftauchen, insbesondere ein relevantes Objekt, das also das Relevanzkriterium erfüllt, kann die Sendeleistung entsprechend wieder reduziert werden. Im Rahmen der vorliegenden Erfindung kann also allgemein gesagt werden, dass die Sendeleistung bei Erfüllung eines Erniedrigungskriteriums von dem zweiten Sendeleistungswert wieder auf den ersten Sendeleistungswert reduziert wird, wobei wenigstens ein erstes des wenigstens einen Erniedrigungskriteriums überprüft, ob ein, insbesondere das Relevanzkriterium erfüllendes, Objekt durch den Radarsensor detektiert wird. Gleichzeitig kann zweckmäßigerweise jedoch auch eine Temperaturüberwachung stattfinden, beispielsweise mittels eines Temperatursensors in oder an dem Radarsensor. Entsprechend sieht eine zweckmäßige Weiterbildung der vorliegenden Erfindung vor, dass wenigstens ein zweites des wenigstens einen Erniedrigungskriteriums überprüft, ob eine Temperatur des Radarsensors, insbesondere einer Sendeeinheit des Radarsensors, einen ersten Schwellwert überschreitet und/oder ein aufgrund einer oder der gemessenen Temperatur über die Zeit mitgeführter thermischer Reservewert einen zweiten Schwellwert unterschreitet.

Wird also kein (relevantes) Objekt erkannt und herrschen genügend thermische Reserven, kann die Sendeleistung auf den zweiten Sendeleistungswert, der insbesondere der maximalen Leistungsfähigkeit eines Sendechips als Sendeeinheit entsprechen kann, erhöht werden, bis ein Objekt erkannt wird oder eine maximale Temperatur (erster Schwellwert) erreicht wird bzw. die thermischen Reserven als zu gering angesehen werden (zweiter Schwellwert).

Dabei sieht eine besonders vorteilhafte Ausgestaltung der vorliegenden Erfindung vor, dass bei Erfüllung des ersten Erniedrigungskriteriums die Sendeleistung von dem zweiten Sendeleistungswert auf den ersten Sendeleistungswert kontinuierlich oder schrittweise, insbesondere in Abhängigkeit eines Abstands und/oder einer relativen Geschwindigkeit des detektierten Objekts, derart reduziert wird, dass das Objekt trotz der Reduzierung der Sendeleistung durch den Radarsensor weiterhin detektiert wird. Mit anderen Worten kann dann, wenn ein (relevantes) Objekt erkannt wird, die Sendeleistung schrittweise wieder reduziert, wobei dies mit besonderem Vorteil derart erfolgt, dass die sich daraus ergebende Reichweite gleich dem oder um einen Toleranzwert größer als der Abstand ist. Mit anderen Worten wird auf diese Weise sichergestellt, dass das Objekt weiterhin erkannt bleibt, mithin nachverfolgt werden kann (sogenanntes "tracking"). Gleichzeitig wird aber die thermische Belastung der Sendeeinheit, insbesondere des Sendechips, wieder reduziert.

Dabei sei an dieser Stelle auch allgemein darauf hingewiesen, dass ausgewertete, nur zur Auswertung des Schaltkriteriums genutzte Radardaten vorteilhafterweise auch von einem Nachverfolgungsalgorithmus (Tracking-Algorithmus) innerhalb des Radarsensors, insbesondere also von einer Nachverfolgungseinheit der Steuereinrichtung des Radarsensors, geliefert werden können. Beispielsweise kann von einer einen Nachverfolgungsalgorithmus umsetzenden Nachverfolgungseinheit die Information geliefert werden ob gerade ein (relevantes) Objekt nachverfolgt wird oder nicht. Im zweiten Fall ist davon auszugehen, dass ein (relevantes) detektiertes Objekt gerade nicht vorliegt. Derartige Nachverfolgungsalgorithmen werden heute üblicherweise innerhalb der Radarsensoren selbst umgesetzt, was auch für die hier beschriebene dynamische Sendeleistungsregelung gelten kann, für welche die Steuereinrichtung des Radarsensors eine entsprechende Sendeleistungseinheit bzw. einen entsprechenden Sendeleistungsalgorithmus aufweisen kann.

Dabei sei in diesem Zusammenhang nochmals hervorgehoben, dass die vorliegende Erfindung eine besonders einfach umsetzbare Variante einer dynamischen Sendeleistungsregelung bietet, die mit bereits vorhandenen Mitteln (Temperatursensor, Nachverfolgungsalgorithmus) umsetzbar ist und beispielsweise durch nur eine kleine Regelschleife mit wenigen Codezeilen in einem Sendeleistungsalgorithmus umsetzbar ist. Mit anderen Worten wird ausgenutzt, dass die benötigten Informationen, beispielsweise ob ein Nachverfolgungsalgorithmus ein relevantes Objekt nachverfolgt, sowie bezüglich der thermischen Belastung Informationen eines insbesondere dem Radarsensor gezielt zugeordneten bzw. in diesem vorgesehenen Temperatursensor, bereits vorliegen und lediglich noch abgefragt werden müssen, um auf einfache Art und Weise eine Sendeleistungsregelung umzusetzen, ohne dass komplexe Beamforming- und Antennencharakteristiksteuerungsansätze benötigt werden. Trotz dieser einfachen Umsetzbarkeit ist eine frühzeitigere Erkennung von (relevanten) Objekten möglich, nachdem dann, wenn kein (relevantes) Objekt erkannt wird, die Sendeleistung, wenn auch nur kurzzeitig, erhöht wird, so dass eine verbesserte Erkennung und damit eine verbesserte Sicherheit im Straßenverkehr gegeben ist. Mit anderen Worten kann durch die dynamische Auslegung der Sendeleistung im Zusammenspiel mit der Erkennung von (relevanten) Objekten und einer Temperaturinformation in einer einfachen Regelschleife eine Verbesserung einer frühzeitigen Objekterkennung erreicht werden.

In diesem Zusammenhang sei noch darauf hingewiesen, dass die thermische Belastung von Sendeeinheiten, insbesondere Sendechips, in Radarsensoren bislang auf die maximale Umgebungstemperatur von 80 bis 85 °C in Verbindung mit der Dauersendeleistung eingestellt wird. In den seltensten Fällen werden aber 80 °C erreicht, da selbst in Wüsten üblicherweise nur kurzzeitig 50 °C und mehr auftreten. Die überwiegenden Erdteile liegen im moderaten Temperaturbereich, wobei die Temperaturen über lange Zeiten im Jahr auch weit von einer Grenze von 30 °C entfernt wären. Daher stellt sich eine kurzzeitige Erhöhung der Sendeleistung, bis erneut ein (relevantes) Objekt im Erfassungsbereich des Radarsensors auftaucht, als umsetzbar heraus.

Dabei bezieht sich die Auswertung des Schaltkriteriums und des wenigstens einen Erniedrigungskriteriums auf relevante Objekte, wobei vorgesehen ist, dass das Relevanzkriterium derart gewählt ist, dass es für Objekte erfüllt ist, die derart klassifiziert sind, dass sie von die Radardaten des Radarsensors nutzenden Funktionen zu berücksichtigen sind. Dabei ist die Klassifizierung von Objekten aus Radardaten im Stand der Technik bereits weitgehend bekannt, um die Zahl der tatsächlich durch die Fahrzeugfunktionen auszuwertenden Objekte möglichst gering zu halten und beispielsweise Randbebauungsobjekte und dergleichen möglichst weitgehend auszuschließen. Entsprechend können Objekte als einer Relevanzklasse zugehörig klassifiziert werden. In einer solchen Relevanzklasse können beispielsweise dynamische Objekte, mithin weitere Verkehrsteilnehmer, enthalten sein. Fahrzeugfunktionen, die Radardaten von Radarsensoren nutzen, können beispielsweise ACC-Funktionen, Überholassistenzfunktionen, Spurwechselassistenzfunktionen, Sicherheitsfunktionen (beispielsweise Ausweichassistenzfunktionen) sowie Funktionen zur wenigstens teilweise automatischen Führung des Kraftfahrzeugs umfassen. Dabei kann das Relevanzkriterium auch berücksichtigen, ob die entsprechende Fahrzeugfunktion zur Zeit überhaupt aktiv ist.

Vorzugsweise kann der zweite Sendeleistungswert gegenüber dem ersten Sendeleistungswert um 20 bis 50 %, insbesondere um 30 %, erhöht sein und/oder die durch den zweiten Sendeleistungswert gegebene Reichweite kann gegenüber der durch den ersten Sendeleistungswert gegebenen Reichweite um 30 bis 70 %, insbesondere 50 %, erhöht sein. Beispielsweise kann die Erhöhung der Sendeleistung von 10 dBm Dauerleistung auf 13 dBm Kurzzeitleistung bereits eine um 50 % erhöhte Reichweite und damit eine frühzeitige Erkennung von (relevanten) Objekten sicherstellen. Dabei sei darauf hingewiesen, dass auch gesetzliche Reglementierungen, die beispielsweise in Deutschland eine effektive isotrope Leistungsabgabe von maximal 55 dBm vorsehen, üblicherweise unproblematisch sind, obwohl diese eine Addition der Sendeleistung in dBm und des Antennengewinns in dBi darstellen. Bei Langreichweitigen Radarsensoren liegt die Sendeleistung typischerweise im Bereich von 10 bis 14 dBm und der Antennengewinn typischerweise bei 15 bis 21 dBi, so dass auch bei einem die maximal mögliche Sendeleistung nutzenden zweiten Sendeleistungswert weit entfernt von einer derartigen Grenze gearbeitet wird.

Wie bereits dargelegt, wird als der Radarsensor bevorzugt ein Radarsensor mit einer als Sendechip, insbesondere MMIC, ausgebildeten Sendeeinheit verwendet. Dabei kann mit besonderem Vorteil vorgesehen sein, dass ein in dem Sendechip integrierter Temperatursensor zur Messung einer Temperatur des Radarsensors, hier konkret einer Temperatur des Sendechips, verwendet wird. Während es im Rahmen der vorliegenden Erfindung zwar grundsätzlich möglich ist, zur Temperaturüberwachung Temperaturmesswerte der Außen- und/oder Umgebungstemperatur heranzuziehen, ist es erfindungsgemäß bevorzugt, einen Temperatursensor in der Nähe des Sendechips oder vorzugsweise dort integriert zu nutzen, um die thermische Belastung des Sendechips möglichst realitätsnah überwachen zu können.

Neben dem Verfahren betrifft die vorliegende Erfindung auch ein Kraftfahrzeug, aufweisend einen insbesondere langreichweitigen Radarsensor, wobei der Radarsensor einen auf das Vorfeld oder den Rückraum des Kraftfahrzeugs gerichteten Erfassungsbereich aufweist, mit einer eine Reichweite des Radarsensors bestimmenden Sendeleistung betrieben wird und zudem eine Steuereinrichtung aufweist, die zur Durchführung des erfindungsgemäßen Verfahrens ausgebildet ist. Sämtliche Ausgestaltungen und Anmerkungen bezüglich des erfindungsgemäßen Verfahrens gelten analog für das erfindungsgemäße Kraftfahrzeug, so dass auch mit diesem die bereits genannten Vorteile erhalten werden können.

Konkret kann die Steuereinrichtung beispielsweise eine Sendeleistungseinheit zur Durchführung des erfindungsgemäßen Verfahrens aufweisen, welche beispielsweise Daten einer Nachverfolgungseinheit der Steuereinrichtung genau wie Daten eines Temperatursensors unmittelbar und/oder einer Temperaturüberwachungseinheit entgegennehmen kann.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan eines Ausführungsbeispiels des erfindungsgemäßen Verfahrens,
- Fig. 2: eine erste Fahrsituation,
- Fig. 3: eine zweite Fahrsituation,
- Fig. 4: ein erfindungsgemäßes Kraftfahrzeug, und
- Fig. 5: den funktionalen Aufbau eines Radarsensors.

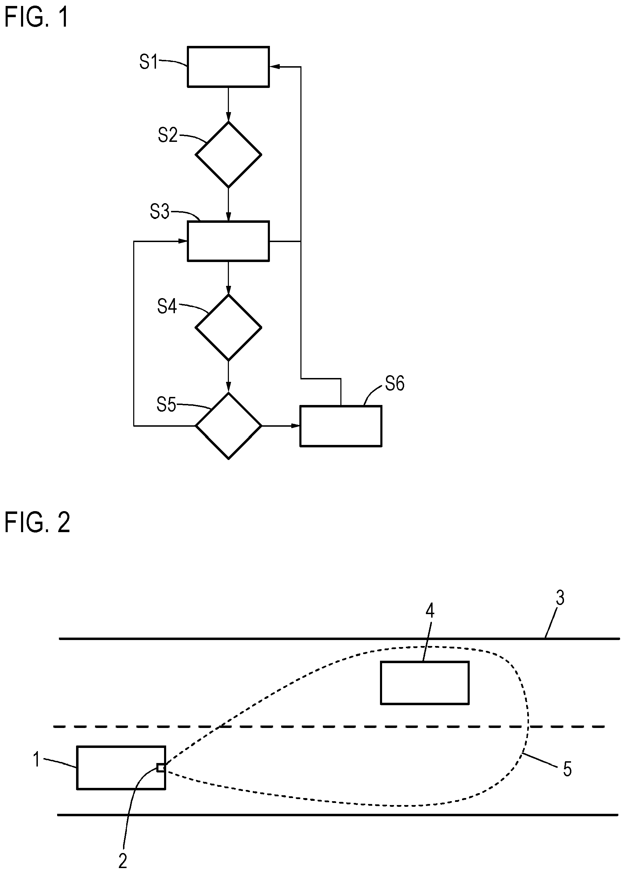

Fig. 1 zeigt einen Ablaufplan eines Ausführungsbeispiels des erfindungsgemäßen Verfahrens zum Betrieb eines langreichweitigen Radarsensors (LRR) in einem Kraftfahrzeug. Der Radarsensor ist dabei auf das Vorfeld oder auf den Rückraum des Kraftfahrzeugs gerichtet. Aufgrund wenigstens einer über längere Zeiträume aktiven Fahrzeugfunktion des Kraftfahrzeugs ist ein dauerhafter Betrieb des Radarsensors erforderlich, damit dieser Radardaten für die Fahrzeugfunktion liefern kann. Hierbei ist der Radarsensor selbst bereits zu einer ersten Auswertung der Radardaten ausgebildet, indem eine Klassifizierung detektierter Objekte aufgrund eines Relevanzkriteriums, das nicht für die wenigstens eine Fahrzeugfunktion relevante Objekte ausfiltert, und eine Nachverfolgung durch einen Nachverfolgungsalgorithmus in einer Nachverfolgungseinheit stattfindet, wobei die Nachverfolgung (Tracking) auf relevante Objekte beschränkt ist. Relevante Objekte können beispielsweise andere Verkehrsteilnehmer und/oder Hindernisse auf der Fahrbahn umfassen.

Im Normalbetrieb des Radarsensors, Schritt S1, wird dieser mit einer Sendeleistung gemäß einem ersten Sendeleistungswert betrieben. Der Normalbetrieb des Radarsensors betrifft dabei die nach einer zugrundeliegenden Erkenntnis deutlich häufigere Situation, in der wenigstens ein relevantes Objekt detektiert und nachverfolgt wird. Der erste Sendeleistungswert ist dabei so gewählt, dass eine Überhitzung des in dem Radarsensor als Sendeeinheit genutzten Sendechips, hier eines MMIC, verhindert wird. Aus dem ersten Sendeleistungswert ergibt sich eine bestimmte erste Reichweite sowie eine bestimmte Erkennungsfähigkeit bezüglich kleinerer Objekte, beispielsweise von Motorradfahrern.

In einem Schritt S2 wird überprüft, ob ein Schaltkriterium erfüllt ist. Vorliegend ist das Schaltkriterium dann erfüllt, wenn keine relevanten Objekte detektiert sind, mithin in der Nachverfolgungseinheit keine relevanten Objekte nachverfolgt werden. Ist das Schaltkriterium nicht erfüllt, wird mit Schritt S1 unter Nutzung des ersten Sendeleistungswerts fortgefahren, während bei Erfüllung des Schaltkriteriums zu einem Schritt S3 verzweigt wird, in dem die Sendeleistung auf einen zweiten Sendeleistungswert, der höher als der erste Sendeleistungswert ist, hochgesetzt wird. In einem Beispiel kann die Sendeleistung dann beispielsweise auf eine maximale Leistungsfähigkeit des Sendechips erhöht werden. Bei einer Erhöhung von 10 dBm als erstem Sendeleistungswert auf 13 dBm als zweitem Sendeleistungswert kann eine gegenüber der ersten Reichweite um 50 % erhöhte zweite Reichweite erreicht werden. Die so erhöhte Sendeleistung erhöht nicht nur die Reichweite, sondern entsprechend auch die Detektionsfähigkeit für kleinere Objekte, so dass insgesamt relevante Objekte früher detektiert werden können. Mit anderen Worten stellt die einfach feststellbare und umsetzbare Erhöhung der Sendeleistung dann, wenn gerade kein relevantes Objekt im Erfassungsbereich existiert, eine möglichst frühzeitige Erkennung neu auftretender relevanter Objekte sicher.

In einem Schritt S4 wird ein zweites Erniedrigungskriterium überprüft, mit welchem festgestellt werden soll, ob eine Überhitzung des Sendechips droht, beispielsweise, wenn der zweite Sendeleistungswert länger als erwartet benötigt wurde oder dergleichen. Hierzu kann überprüft werden, ob ein Temperaturmesswert eines Temperatursensors einen ersten Schwellwert überschreitet und/oder, falls eine Wärmebilanz geführt wird, ob eine thermische Reserve einen zweiten Schwellwert unterschreitet. Ist das zweite Erniedrigungskriterium erfüllt, wird die Sendeleistung, zumindest temporär, wieder auf den ersten Sendeleistungswert gesenkt, Schritt S1.

Ansonsten wird in einem Schritt S5 ein erstes Erniedrigungskriterium überprüft, welches überwacht, ob durch den Radarsensor, frühzeitig aufgrund der erhöhten Sendeleistung, ein neues relevantes Objekt detektiert wurde. Ist dies nicht der Fall, wird mit Schritt S3 fortgefahren, ist dies jedoch der Fall, wird zu einem Schritt S6 verzweigt. In dem Schritt S6 wird die Sendeleistung ausgehend von dem zweiten Sendeleistungswert schrittweise (oder alternativ auch kontinuierlich) wieder auf den ersten Sendeleistungswert reduziert, wobei mit dessen Erreichen wieder mit Schritt S1 fortgefahren wird. Die schrittweise (oder alternativ kontinuierliche) Reduzierung erfolgt dabei in Abhängigkeit von dem Abstand und/oder der Relativgeschwindigkeit des detektierten Objekts derart, dass sichergestellt ist, dass dieses Objekt auch weiter detektiert und somit nachverfolgt werden kann. Mit anderen Worten wird eine Sendeleistung so gewählt, dass die Reichweite eine fortdauernde Detektion des Objekts erlaubt.

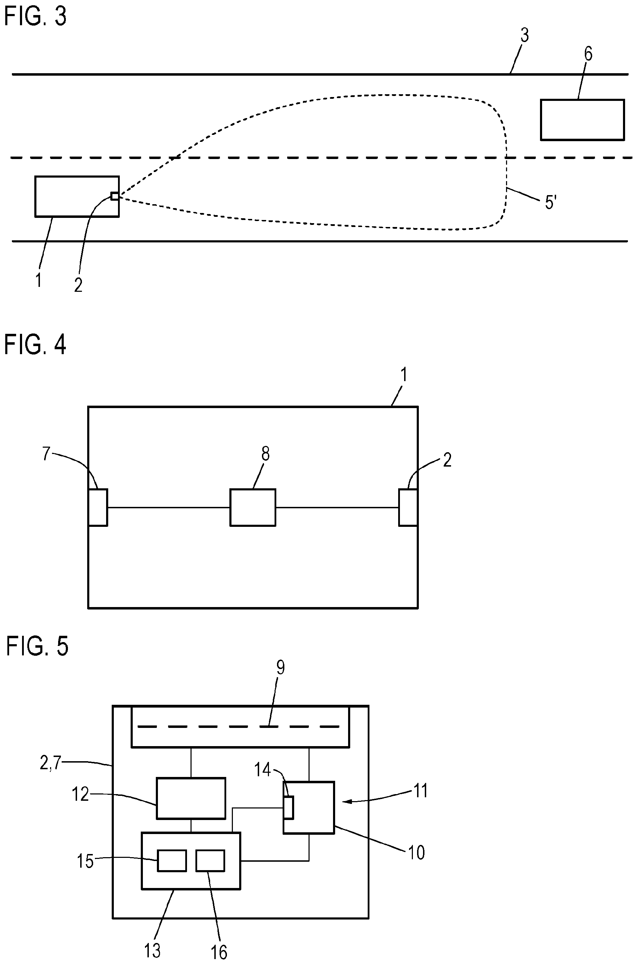

Fig. 2 und Fig. 3 erläutern dies anhand von zwei Verkehrssituationen genauer. Fig. 2 zeigt ein erfindungsgemäßes Kraftfahrzeug 1 mit einem langreichweitigen Front-Radarsensor 2 auf einer Straße 3. Ein weiterer Verkehrsteilnehmer kommt entgegen und befindet sich innerhalb des Erfassungsbereichs 5 des Radarsensors 2. Dieser wird mit einer Sendeleistung gemäß dem ersten Sendeleistungswert betrieben, so dass eine eher geringe Reichweite gegeben ist. In der Situation der Fig. 3 jedoch ist kein weiterer Verkehrsteilnehmer 4 und somit kein relevantes Objekt vorhanden, so dass die Sendeleistung gemäß dem zweiten Sendeleistungswert verwendet wird und der Erfassungsbereich 5' mit einer deutlich, beispielsweise um 50 %, erhöhten Reichweite gegeben ist. Somit können in Fig. 3 beispielhaft angedeutete neue relevante Objekte 6 frühzeitig detektiert werden.

Fig. 4 zeigt eine Prinzipskizze des erfindungsgemäßen Kraftfahrzeugs 1, welches vorliegend neben dem bereits beschriebenen langreichweitigen Front-Radarsensor 2 auch einen langreichweitigen oder mittelreichweitigen Heck-Radarsensor 7 umfasst, die ihre bereits vorausgewerteten Radardaten, insbesondere also die Nachverfolgung der relevanten Objekte betreffend, an verschiedene Fahrzeugsysteme 8 weiterleiten können, die die Radardaten nutzende Fahrzeugfunktionen ausführen.

Der funktionale Aufbau der Radarsensoren 2, 7 ist in Fig. 5 näher gezeigt. Demgemäß weisen die Radarsensoren 2, 7 neben einer Antennenanordnung 9, der eine als Sendechip 10 ausgebildete Sendeeinheit 11 und eine Empfangseinheit 12 zugeordnet sind, eine Steuereinrichtung 13 auf, die zur Durchführung des erfindungsgemäßen Verfahrens ausgebildet ist. In dem Sendechip 10, vorliegend ein MMIC, ist auch ein Temperatursensor 14 integriert, der seine Temperaturmesswerte an die Steuereinrichtung 13 liefert. Die Steuereinrichtung 13 umfasst neben grundsätzlich bekannten Funktionseinheiten vorliegend in jedem Fall eine Nachverfolgungseinheit 15, in der, wie grundsätzlich bekannt, ein Nachverfolgungsalgorithmus (Tracking-Algorithmus) ausgeführt wird. Die Nachverfolgungseinheit 15 kann auch eine Klassifizierung von Objekten als relevant oder nicht relevant vornehmen, was jedoch auch durch eine Klassifizierungseinheit geschehen kann. Informationen darüber, ob ein relevantes Objekt 6 detektiert wurde oder nicht, werden, wie auch die Temperaturmesswerte des Temperatursensors 14, an die konkret das erfindungsgemäße Verfahren durchführende Sendeleistungseinheit 16 weitergeleitet.

## Patentansprüche

1. Verfahren zum Betrieb eines insbesondere langreichweitigen Radarsensors (2, 7) in einem Kraftfahrzeug (1), wobei der Radarsensor (2, 7) einen auf das Vorfeld oder den Rückraum des Kraftfahrzeugs (1) gerichteten Erfassungsbereich (5, 5') aufweist, der Radarsensor (2, 7) mit einer eine Reichweite des Radarsensors (2, 7) bestimmenden Sendeleistung betrieben wird und die Radardaten des Radarsensors (2, 7), insbesondere innerhalb des Radarsensors (2, 7) selbst, zur Detektion von Objekten (6) im Erfassungsbereich (5, 5') ausgewertet werden,
**dadurch gekennzeichnet,**
**dass** bei Erfüllung eines keine ein Relevanzkriterium erfüllenden, durch den Radarsensor (2, 7) detektierten Objekte (6) anzeigenden Schaltkriteriums die Sendeleistung des Radarsensors (2, 7) von einem ersten Sendeleistungswert auf einen zweiten Sendeleistungswert erhöht wird, wobei das Relevanzkriterium derart gewählt ist, dass es für als von die Radardaten des Radarsensors (2, 7) nutzenden Funktionen zu berücksichtigend klassifizierte Objekte (6) erfüllt ist.

2. Verfahren nach Anspruch 1,
**dadurch gekennzeichnet,**
**dass** die Sendeleistung bei Erfüllung wenigstens eines Erniedrigungskriteriums von dem zweiten Sendeleistungswert wieder auf den ersten Sendeleistungswert reduziert wird.

3. Verfahren nach Anspruch 2,
**dadurch gekennzeichnet,**
**dass** wenigstens ein erstes des wenigstens einen Erniedrigungskriteriums überprüft, ob ein, insbesondere das Relevanzkriterium erfüllendes, Objekt (6) durch den Radarsensor (2, 7) detektiert wird, und/oder wenigstens ein zweites des wenigstens einen Erniedrigungskriteriums überprüft, ob eine Temperatur des Radarsensors (2, 7), insbesondere einer Sendeeinheit (11) des Radarsensors (2, 7), einen ersten Schwellwert überschreitet und/oder ein aufgrund einer oder der gemessenen Temperatur über die Zeit mitgeführter thermischer Reservewert einen zweiten Schwellwert unterschreitet.

4. Verfahren nach Anspruch 3,
**dadurch gekennzeichnet,**
**dass** bei Erfüllung des ersten Erniedrigungskriteriums die Sendeleistung von dem zweiten Sendeleistungswert auf den ersten Sendeleistungswert kontinuierlich oder schrittweise, insbesondere in Abhängigkeit eines Abstands und/oder einer relativen Geschwindigkeit des detektierten Objekts (6), derart reduziert wird, dass das Objekt (6) trotz der Reduzierung der Sendeleistung durch den Radarsensor (2, 7) weiterhin detektiert wird.

5. Verfahren nach Anspruch 4,
**dadurch gekennzeichnet,**
**dass** die Sendeleistung derart bis zum ersten Sendeleistungswert reduziert wird, dass die sich daraus ergebende Reichweite gleich dem oder um einen Toleranzwert größer als der Abstand ist.

6. Verfahren nach einem der vorangehenden Ansprüche,
**dadurch gekennzeichnet,**
**dass** der zweite Sendeleistungswert gegenüber dem ersten Sendeleistungswert um 20 bis 50%, insbesondere um 30%, erhöht ist und/oder die durch den zweiten Sendeleistungswert gegebene Reichweite gegenüber der durch den ersten Sendeleistungswert gegebenen Reichweite um 30 bis 70%, insbesondere 50%, erhöht ist.

7. Verfahren nach einem der vorangehenden Ansprüche,
**dadurch gekennzeichnet,**
**dass** als der Radarsensor (2, 7) ein Radarsensor (2, 7) mit einer als Sendechip (10), insbesondere MMIC, ausgebildeten Sendeeinheit (11) verwendet wird.

8. Verfahren nach Anspruch 7,
**dadurch gekennzeichnet,**
**dass** ein in den Sendechip (10) integrierter Temperatursensor (14) zur Messung einer Temperatur des Radarsensors (2, 7) verwendet wird.

9. Kraftfahrzeug (1), aufweisend einen insbesondere langreichweitigen Radarsensor (2, 7), wobei der Radarsensor (2, 7) einen auf das Vorfeld oder den Rückraum des Kraftfahrzeugs (1) gerichteten Erfassungsbereich (5, 5') aufweist, mit einer eine Reichweite des Radarsensors (2, 7) bestimmenden Sendeleistung betrieben wird und eine Steuereinrichtung (13) aufweist, die zur Durchführung eines Verfahrens nach einem der vorangehenden Ansprüche ausgebildet ist.

## Claims

1. Method for operating a radar sensor (2, 7), in particular a long-range radar sensor (2, 7), in a motor vehicle (1), wherein the radar sensor (2, 7) has a detection region (5, 5') directed towards the area in front of or the space behind the motor vehicle (1); the radar sensor (2, 7) is operated with a transmission power determining a range of the radar sensor (2, 7) and the radar data for the radar sensor (2, 7) is analyzed, in particular within the radar sensor (2, 7) itself, to detect objects (6) in the detection region (5, 5'),
**characterised in that**
the transmission power of the radar sensor (2, 7) is increased from a first transmission power value to a second transmission power value when a switching criterion is fulfilled indicating that no objects (6), fulfilling a relevance criterion, are detected by the radar sensor (2, 7), wherein the relevance criterion is chosen such that it is fulfilled for classified objects (6) to be taken into account by the demand functions of the radar data for the radar sensor (2, 7).

2. Method according to claim 1,
**characterised in that**
the transmission power is reduced again from the second transmission power value to the first transmission power value when at least one reduction criterion is fulfilled.

3. Method according to claim 2,
**characterised in that**
at least a first of the at least one reduction criterion checks whether, an object (6), in particular an object (6) fulfilling the relevance criterion, is detected by the radar sensor (2, 7), and/or at least a second of the at least one reduction criterion checks whether a temperature of the radar sensor (2, 7), in particular of a transmission unit (11) of the radar sensor (2, 7), exceeds a first threshold and/or a thermal reserve value included over time on the basis of one or the measured temperature falls below a second threshold.

4. Method according to claim 3,
**characterised in that**
when the first reduction criterion is fulfilled, the transmission power is reduced from the second transmission power value to the first transmission power value continuously or in stages, in particular as a function of a distance and/or a relative speed of the detected object (6), such that the object (6) is still detected by the radar sensor (2, 7) despite the reduction in transmission power.

5. Method according to claim 4,
**characterised in that**
the transmission power is reduced to the first transmission power value such that the resulting range is equal to or greater than the distance by a tolerance value.

6. Method according to any of the preceding claims,
**characterised in that**
the second transmission power value is increased relative to the first transmission power value by 20 to 50%, in particular by 30%, and/or the range provided by the second transmission power value is increased relative to the range provided by the first transmission power value by 30 to 70%, in particular 50%.

7. Method according to any of the preceding claims,
**characterised in that**
a radar sensor (2, 7) with a transmission unit (11) designed as a transmission chip (10), in particular an MMIC, is used as the radar sensor (2, 7).

8. Method according to claim 7,
**characterised in that**
a temperature sensor (14) integrated into the transmission chip (10) is used to measure a temperature of the radar sensor (2, 7).

9. Motor vehicle (1), having a radar sensor (2, 7), in particular a long-range radar sensor (2, 7), wherein the radar sensor (2, 7) has a detection region (5, 5') directed towards the area in front of or the space behind the motor vehicle (1), operated with a transmission power determining a range of the radar sensor (2, 7) and a controller (13), which is designed to perform a method according to any of the preceding claims.

## Revendications

1. Procédé de fonctionnement d'un capteur radar (2, 7) en particulier à longue portée dans un véhicule automobile (1), dans lequel le capteur radar (2, 7) présente une zone de détection (5, 5') dirigée sur la zone située devant ou derrière le véhicule automobile (1), le capteur radar (2, 7) fonctionne avec une puissance d'émission déterminant une portée du capteur radar (2, 7) et les données de radar du capteur radar (2, 7), en particulier à l'intérieur du capteur radar (2, 7) lui-même, sont évaluées pour la détection d'objets (6) dans la zone de détection (5, 5'),
**caractérisé en ce que**
lors du remplissage d'un critère de commutation indiquant qu'aucun objet (6) remplissant un critère de pertinence n'a été détecté par le capteur radar (2, 7), la puissance d'émission du capteur radar (2, 7) est augmentée d'une première valeur de puissance d'émission à une seconde valeur de puissance d'émission, dans lequel le critère de pertinence est choisi de telle manière qu'il soit rempli pour des objets (6) classés comme étant à prendre en compte par des fonctions utilisant les données de radar du capteur radar (2, 7).

2. Procédé selon la revendication 1,
**caractérisé en ce que**
la puissance d'émission est de nouveau réduite lors du remplissage d'au moins un critère de diminution de la seconde valeur de puissance d'émission à la première valeur de puissance d'émission.

3. Procédé selon la revendication 2,
**caractérisé en ce que**
au moins un premier de l'au moins un critère de diminution vérifie si un objet (6), remplissant en particulier le critère de pertinence, est détecté par le capteur radar (2, 7), et/ou au moins un second de l'au moins un critère de diminution vérifie si une température du capteur radar (2, 7), en particulier d'une unité d'émission (11) du capteur radar (2, 7), dépasse une première valeur seuil et/ou une valeur de réserve thermique entraînée en raison d'une ou de la température mesurée dans le temps reste en dessous d'une seconde valeur seuil.

4. Procédé selon la revendication 3,
**caractérisé en ce que**
lors du remplissage du premier critère de diminution, la puissance d'émission est réduite de la seconde valeur de puissance d'émission à la première valeur de puissance d'émission en continu ou progressivement, en particulier en fonction d'une distance et/ou d'une vitesse relative de l'objet (6) détecté de telle manière que l'objet (6) soit en outre détecté en dépit de la réduction de la puissance d'émission par le capteur radar (2, 7).

5. Procédé selon la revendication 4,
**caractérisé en ce que**
la puissance d'émission est réduite jusqu'à la première valeur de puissance d'émission de telle manière que la portée en résultant soit égale ou supérieure d'une valeur de tolérance à la distance.

6. Procédé selon l'une quelconque des revendications précédentes,
**caractérisé en ce que**
la seconde valeur de puissance d'émission est augmentée par rapport à la première valeur de puissance d'émission de 20 à 50 %, en particulier de 30 % et/ou la portée donnée par la seconde valeur de puissance d'émission est augmentée par rapport à la portée donnée par la première valeur de puissance d'émission de 30 à 70 %, en particulier de 50 %.

7. Procédé selon l'une quelconque des revendications précédentes,
**caractérisé en ce que**
un capteur radar (2, 7) avec une unité d'émission (11) formée comme puce émettrice (10), en particulier MMIC, est utilisé comme capteur radar (2, 7).

8. Procédé selon la revendication 7,
**caractérisé en ce que**
un capteur de température (14) intégré dans la puce émettrice (10) est utilisé pour la mesure d'une température du capteur radar (2, 7).

9. Véhicule automobile (1) présentant un capteur radar (2, 7) en particulier à longue portée, dans lequel le capteur radar (2, 7) présente une zone de détection (5, 5') dirigée sur la zone située devant ou derrière le véhicule automobile (1), fonctionne avec une puissance d'émission déterminant une portée du capteur radar (2, 7) et présente un dispositif de commande (13) qui est formé pour la mise en oeuvre d'un procédé selon l'une quelconque des revendications précédentes.
